(19) Europäisches Patentamt / European Patent Office / Office européen des brevets

(11) **EP 2 508 940 A1**

(12) **EUROPEAN PATENT APPLICATION**
published in accordance with Art. 153(4) EPC

(43) Date of publication:
**10.10.2012 Bulletin 2012/41**

(21) Application number: **10834446.6**

(22) Date of filing: **21.10.2010**

(51) Int Cl.:
*G02F 1/1335* (2006.01)     *G02B 1/11* (2006.01)
*G02B 5/30* (2006.01)     *G09F 9/00* (2006.01)

(86) International application number:
**PCT/JP2010/068614**

(87) International publication number:
**WO 2011/067993 (09.06.2011 Gazette 2011/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.12.2009 JP 2009275667**

(71) Applicant: **Sharp Kabushiki Kaisha
Osaka-shi, Osaka 545-8522 (JP)**

(72) Inventors:
• **HASEGAWA Masahiro
c/o Sharp Kabushiki Kaisha
Osaka 545-8522 (JP)**
• **SAKAI Akira
c/o Sharp Kabushiki Kaisha
Osaka 545-8522 (JP)**

(74) Representative: **Müller - Hoffmann & Partner
Patentanwälte
Innere Wiener Strasse 17
81667 München (DE)**

(54) **LIQUID CRYSTAL DISPLAY DEVICE**

(57)     The present invention provides a liquid crystal display device which can ensure visibility and decrease coloring regardless of the direction of the screen, even if the screen is viewed through an optical member having a polarization function, such as polarized sunglasses. The present invention is a liquid crystal display device includes:
a liquid crystal cell; and
a first polarizing element disposed at an observation surface side of the liquid crystal cell,
and the liquid crystal display device further includes a second polarizing element disposed at the observation surface side of the first polarizing element. It is preferable that the liquid crystal display device further includes a protective plate disposed between the first polarizing element and the second polarizing element.

Fig. 1

**Description**

TECHNICAL FIELD

The present invention relates to a liquid crystal display device, and more particularly to a liquid crystal display device which is suitably used for an application where displayed images are viewed in a state of wearing polarized sunglasses.

BACKGROUND ART

Recently the screen sizes of liquid crystal display devices are increasing, and liquid crystal devices are now used for various applications, including large screen TVs. In particular, application as a display device for outdoor environments, such as a digital signage, is receiving attention.

In the case of such a liquid crystal display device used in outdoor environments, a viewer may view the screen in a state of wearing polarized sunglasses to prevent glare from outdoor light. A liquid crystal display device normally displays images using polarizing elements, and light transmitting through the polarizing elements at the front face side is emitted to viewers, therefore emitted light is linearly polarized light. Hence if the screen of the liquid crystal display is viewed in a state of wearing polarized sunglasses, the visibility may change depending on the angle formed by the direction of the polarization axis (absorption axis) of the polarized sunglasses and the polarization axis (absorption axis) of the polarizing elements at the front face side of the liquid crystal device. In other words, if the polarization axes forming an angle are substantially parallel to each other, there are no visibility problems. However if the polarization axes forming an angle are substantially orthogonal to each other, linearly polarized light emitted from the liquid crystal display device is absorbed by the polarized sunglasses, so the screen appears too dark to be visible. In order to prevent such a problem in a large sized liquid crystal display device, the polarization axis (absorption axis) of a polarizing element at the front face side is set to have a long side direction of the screen.

In the case of a digital signage application, however, a liquid crystal display device is not always installed with the long side of the display screen horizontal (also called landscape mode), but may be installed with the long side of the display screen vertical (also called portrait mode). In such a case, if the liquid crystal device, in which polarization axis (absorption axis) of the polarizing element at the front face side is set to be the long side direction, is installed in a portrait mode, the screen becomes too dark to be viewed, as mentioned above. It is possible to provide two types of polarizers: one for a landscape mode and the other for a portrait mode, so that one is glued depending on the installation method, but cost increases if this method is used.

On the other hand, a technology to convert the emitted light into circularly polarized light or elliptically polarized light by installing a quarter-wave plate at the further front face side of a polarizing element at the front face side has been disclosed (e.g. see Patent Document 1).

A technology to convert the emitted light into circularly polarized light or elliptically polarized light by installing a function layer at the further front side of the polarizing element at the front face side has also been disclosed (e.g. see Patent Document 2).

A technology to install a half-wave plate at the further front face side of a polarizing element at the front face side has also been disclosed (e.g. see Patent Document 3).

A technology to dispose an optical member layer having a high retardation value at the front face side of the liquid crystal display device has also been disclosed (e.g. see Patent Document 4).

[Patent Document 1] Japanese Kokai Publication No. 2009-122454
[Patent Document 2] Japanese Kokai Publication No. 2009-122423
[Patent Document 3] Japanese Kokai Publication NO. 2008-83115
[Patent Document 4] Japanese Kokai Publication No. 2004-170875

DISCLOSURE OF INVENTION

However in the case of the methods according to Patent Documents 1 to 3, coloring may be generated by wavelength dispersion of such a retarder as a quarter-wave plate. A possible way to solve this problem is using a retarder of which refractive index increases in proportion to the increase in wavelength, that is, a retarder which performs inverse wavelength dispersion. But a retarder material which implements an ideal inverse wavelength dispersion has yet to be developed, so sufficiently suppressing coloring is difficult.

In the case of the method according to Patent Document 4 as well, a rainbow colored unevenness may be generated if an optical member layer, having high retardation, is disposed between a polarizing element of the liquid crystal display device and a polarizing element of polarized sunglasses.

With the foregoing in view, it is an object of the present invention to provide a liquid crystal display device which can ensure visibility and decrease coloring regardless of the direction of the screen, even if the screen is viewed through an optical member having a polarization function, such as polarized sunglasses.

MEANS FOR SOLVING THE PROBLEMS

After examining various ways which can ensure visibility and decrease coloring regardless of the direction of the screen on liquid crystal displays, even if the screen is viewed through an optical member having a polarization function, such as polarized sunglasses, the present inventor paid attention to the direction of the polarized light emitted from the liquid crystal display device. It was then discovered that by disposing a first polarizing element at the observation surface side of the liquid crystal cell and disposing a second polarizing element at the observation surface side of the first polarizing element, the direction (vibrating direction) of the polarized light emitted from the liquid crystal display device can be changed diagonally with respect to the side of the screen, therefore at least a part of the emitted light can be transmitted through the polarized sunglasses, regardless whether the screen is in the landscape mode or portrait mode, and the generation of coloring can be suppressed since the wavelength dispersion of the polarizing element is normally smaller than that of the retarder, whereby the above mentioned problems can be completely solved, which led to the present invention.

The present invention is a liquid crystal display device including: a liquid crystal cell; and a first polarizing element disposed at an observation surface side of the liquid crystal cell, and the liquid crystal display device further includes a second polarizing element disposed at the observation surface side of the first polarizing element.

For the configuration of the liquid crystal display device of the present invention, other composing elements to be used are not especially restricted as long as the liquid crystal device is composed of the above essential composing elements.

Preferred embodiments of the liquid crystal display device of the present invention will now be described in detail. The various embodiments shown below may be combined if appropriate.

It is preferable that an angle formed by an absorption axis of the first polarizing element and an absorption axis of the second polarizing element is 20° to 70°. If the angle deviates from this range, visibility in the state of wearing polarized sunglasses may not be able to be sufficiently ensured in either the landscape mode or the portrait mode.

It is preferable that the liquid crystal display device further includes a protective plate disposed between the first polarizing element and the second polarizing element. An appropriate application of the liquid crystal display device of the present invention includes a digital signage, but if the panel is exposed, it is more likely that the panel is damaged in this application, compared with panels used at home. Therefore it is preferable to dispose a protective plate to protect the panel. If the protective plate is disposed on the outermost surface of the liquid crystal display device, reflection is generated on the interface of the protective plate, which drops a display quality. Hence the protective plate is disposed between the first polarizing element and second polarizing element. Thereby an appropriate optical anisotropic layer can be combined with the second polarizing element, and as a result, reflection on the interface of the protective plate can be prevented.

It is preferable that the liquid crystal display device further includes an optical anisotropic layer disposed between the second polarizing element and the protective plate. Then the reflection on the interface of the protective plate can be prevented with certainty.

It is preferable that the optical anisotropic layer is a quarter-wave plate. Then a circularly polarizing plate can be constituted by the first polarizing element and the optical anisotropic layer, so the reflection on the interface of the protective plate can be effectively suppressed.

It is preferable that an angle formed by a slow axis of the optical anisotropic layer and an absorption axis of the second polarizing element is 40° to 50°, and it is more preferable that an angle formed by a slow axis of the quarter-wave plate and the absorption axis of the second polarizing element is 40° to 50°. Then the reflection on the interface of the protective plate can be suppressed more effectively.

It is preferable that a slow axis of the optical anisotropic layer and an absorption axis of the first polarizing element are disposed approximately in parallel. Then the optical anisotropic layer does not unnecessarily influence the light (display light) emitted from the first polarizing element.

Here "approximately parallel" is preferably within ±5° from an accurately parallel disposition, and more preferably within ±1° therefrom.

It is preferable that the liquid crystal display device further includes a low reflection processed layer disposed at the observation surface side of the second polarizing element. Then the reflection on the surface of the second polarizing element can be suppressed. This embodiment is therefore preferable for the liquid crystal display device of the present invention, which is suitable for a digital signage used in an environment where outdoor light enters.

It is preferable that the low reflection processed layer has a moth-eye structure. Then the reflection on the surface of the second polarizing element can be remarkably suppressed. This embodiment is therefore particularly preferable for the liquid crystal display device of the present invention which is suitable for a digital signage.

It is preferable that the liquid crystal display device further includes a third polarizing element disposed at a rear face side of the liquid crystal cell. Then a transmissive liquid crystal display device can be implemented. The liquid crystal display device of the present invention can be a reflective liquid crystal display device, but in this case, the screen becomes dark since the light transmits through the second polarizing element twice. In the case of the transmissive liquid crystal display device, on the other hand, the screen can be brighter since the light transmits through the second polarizing element only once.

It is preferable that the liquid crystal display device has an approximately square screen, and an absorption axis of the first polarizing element is disposed to be approximately orthogonal to or approximately parallel with a side of the screen. Then for the liquid crystal display device of the present invention, liquid crystal modes which excel in a display quality, such as vertical alignment (VA) mode, in-plane switching (IPS) mode and field fringe switching (FFS) mode, can be used.

Here "approximately orthogonal" is preferably within ±20° from an accurately orthogonal direction to a side of the screen, and more preferably within ±10° therefrom. "Approximately parallel" is preferably within ±20° from an accurately parallel direction with a side of the screen, and more preferably within ±10° therefrom.

EFFECT OF THE INVENTION

According to the liquid crystal display device of the present invention, visibility can be ensured and coloring can be decreased regardless of the direction of the screen, even if the screen is viewed through an optical member having a polarization function, such as polarized sunglasses.

BRIEF DESCRIPTION OF THE DRAWINGS

[Fig. 1] Fig. 1 is a cross-sectional view schematically depicting a configuration of a liquid crystal display device according to Embodiment 1.
[Fig. 2] Fig. 2 is a diagram depicting an axial relationship between a conventional liquid crystal display device and polarized sunglasses, and shows a case of installing the liquid crystal display device in the landscape mode.
[Fig. 3] Fig. 3 is a diagram depicting an axial relationship between the conventional liquid crystal display device and polarized sunglasses, and shows a case of installing the liquid crystal display device in the portrait mode.
[Fig. 4] Fig. 4 is a diagram depicting an axial relationship between the liquid crystal display device of Embodiment 1 and polarized sunglasses, and shows a case of installing the liquid crystal display device in the landscape mode.
[Fig. 5] Fig. 5 is a diagram depicting an axial relationship between the liquid crystal display device of Embodiment 1 and polarized sunglasses, and shows a case of installing the liquid crystal display device in the portrait mode.
[Fig. 6] Fig. 6 is a cross-sectional view schematically depicting a configuration of the liquid crystal display device according to Embodiment 1.

BEST MODE FOR CARRYING OUT THE INVENTION

In this description, a linearly polarizing element has a function to convert natural light into linearly polarized light, and unless otherwise specified, "polarizing element" referred to in this description simply means an element having a polarizing function, without including a protective film.

An in-plane retardation Re is an in-plane retardation (unit: nm) defined by $Re = |nx - ny| \times d$. A perpendicular direction retardation Rth, on the other hand, is an out-of-plane (perpendicular direction) retardation (unit: nm) defined by $Rth = (nz - (nx+ny)/2) \times d$. The measured wavelength of the retardation in this description is 550 nm unless otherwise specified.

In the formulae above, nx denotes a refractive index in a direction where an in-plane refractive index of an optical anisotropic layer (including a liquid crystal cell and a quarter-wave plate) is the maximum (that is, the slow axis direction), ny denotes a refractive index in a direction which intersects orthogonally with the slow axis (nx) in the plane, nz denotes a refractive index in the perpendicular direction, and d denotes the thickness of the optical anisotropic layer.

In this description, the optical anisotropic layer refers to a layer having optical anisotropy. In terms of exhibiting functional effects of the present invention sufficiently, the optical anisotropic layer is a layer in which one of the in-plane retardation Re and the absolute value of the perpendicular direction retardation Rth is 10 nm or greater, and preferably is 30 nm.

In this description, retardation and axial direction can be measured using a polarization and retardation analysis/measurement system (AxoScan) made by Axometrics Inc. In this device, two rotating retardation elements are disposed between two polarizers disposed in parallel nichol. In other words, two sets of a polarizer and retardation element are disposed one above the other. A measurement sample is disposed between the two retardation elements, and polarized light emitted from the measurement sample is detected, and the changes from the polarized light which entered the measurement sample is analyzed, whereby retardation and an axial direction are measured.

In this description, unless otherwise stated, the optical characteristics of the polarization state, retardation or the like, are the optical characteristics of the polarization state, retardation or the like at wavelength 550 nm when the screen is observed from the front face direction, in other words, the normal line direction of the screen.

The present invention will now be described in detail, using embodiments, with respect to the drawings, but the present invention is not limited to these embodiments.

[Embodiment 1]

(Liquid crystal display device)

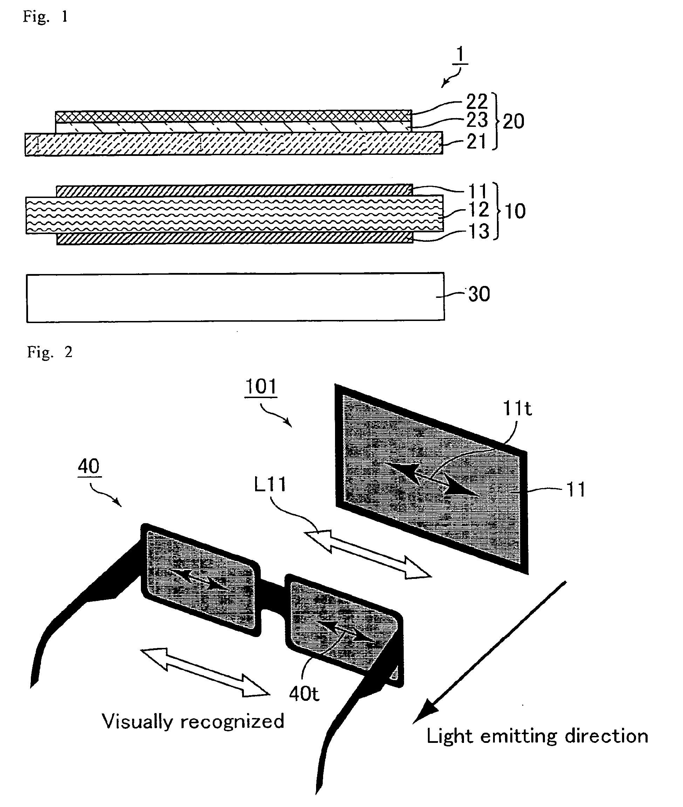

A liquid crystal display device 1 is a transmissive liquid crystal display device as shown in Fig. 1, and has a back light unit 30, a liquid crystal display panel 10 which is disposed at the emission surface side of the back light unit 30, and a front plate 20 which is disposed at the observation surface side of the liquid crystal display panel 10.

The liquid crystal display panel 10 has a liquid crystal cell 12, a polarizing element 11 (corresponds to the first polarizing element) glued to the observation surface of the liquid crystal cell 12 with acrylic adhesive, and a polarizing element 13 (corresponds to the third polarizing element) glued to the rear face of the liquid crystal cell 12 with acrylic adhesive.

The front plate 20 has a protective plate 21, an optical anisotropic layer 23 which is glued to the front face of the protective plate 21 with acrylic adhesive, and a polarizing element 22 (corresponds to the second polarizing element) disposed on the front face of the optical anisotropic layer 23.

In this way, according to the liquid crystal display device 1 of this embodiment, the back light unit 30, the polarizing element 13, an adhesive layer (not illustrated), the liquid crystal cell 12, the adhesive layer (not illustrated), the polarizing element 11, the protective plate 21, an adhesive layer (not illustrated), the optical anisotropic layer 23 and the polarizing element 22 are stacked in this sequence.

The polarizing elements 11, 13 and 22 are all linearly polarizing elements.

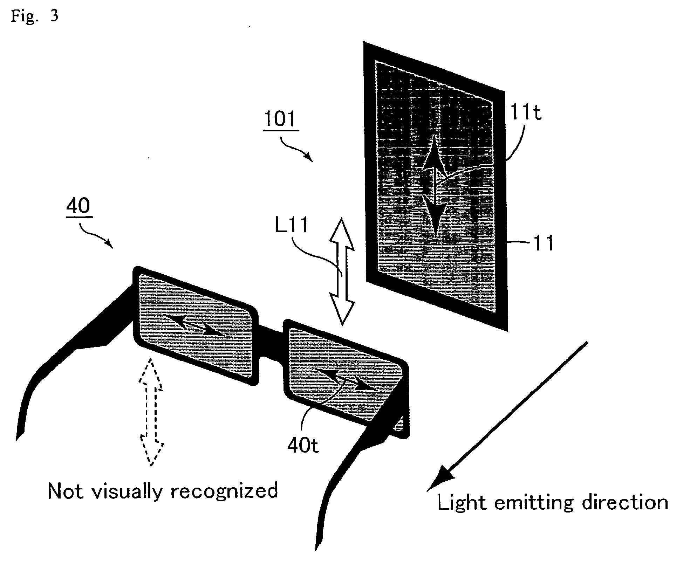

As Fig. 2 shows, a general liquid crystal display 101 does not have the polarizing element 22, and a viewer views a linearly polarized light L11 emitted from the polarizing element 11. When viewing in a state of wearing polarized sunglasses 40, the viewer can visually recognize the image from the liquid crystal display device 101 because the linearly polarized light L11 transmits through the polarized sunglasses 40 if the vibrating directions of the linearly polarized light L11, that is, the transmission axis 11t of the polarizing element 11 and the transmission axis 40t of the polarized sunglasses 40, are approximately in parallel (landscape mode). However if the transmission axis 11t of the polarizing element 11 and the transmission axis 40t of the polarized sunglasses 40 are approximately orthogonal (portrait mode), as shown in Fig. 3, the display becomes dark because the linearly polarized light L11 is absorbed by the polarized sunglasses 40, and as a result, the viewer cannot visually recognize the image from the liquid crystal display device 101.

Whereas in the case of the liquid crystal display device 1, the polarizing element 22 is further disposed at the observation surface side of the polarizing element 11. Therefore the vibrating direction of the linearly polarized light emitted from the polarizing element 11 can be appropriately changed by the polarizing element 22. In concrete terms, the vibrating direction can be changed in the diagonal direction (e.g. approximately 45° direction) with respect to a side of the display screen (approximately square screen).

Here the transmittance values of the two polarizing elements are given by the following Equation (1), where T ($\ominus$) is a transmittance when an angle formed by the absorption axes of the two polarizing elements is $\ominus$.

$$\mathrm{T}(\Theta) \;=\; 1/2\{(\mathrm{Tp1}{\cdot}\mathrm{Tp2}{+}\mathrm{Tc1}{\cdot}\mathrm{Tc2})\cos^2\Theta{+}(\mathrm{Tp1}{\cdot}\mathrm{Tc2}{+}\mathrm{Tc2}{\cdot}\mathrm{Tp2})\sin^2\Theta\}$$

$$(1)$$

In Eq. (1), Tp1 denotes a transmittance when linearly polarized light that is in parallel with the transmission axis direction of one polarizing element is entered, Tc1 denotes a transmittance when linearly polarized light that is in parallel with the absorption axis direction of one polarizing element is entered, Tp2 denotes a transmittance when linearly polarized light that is in parallel with the transmission axis direction of the other polarizing element is entered, and Tc2 denotes a transmittance when linearly polarized light that is in parallel with the absorption axis direction of the other polarizing element is entered.

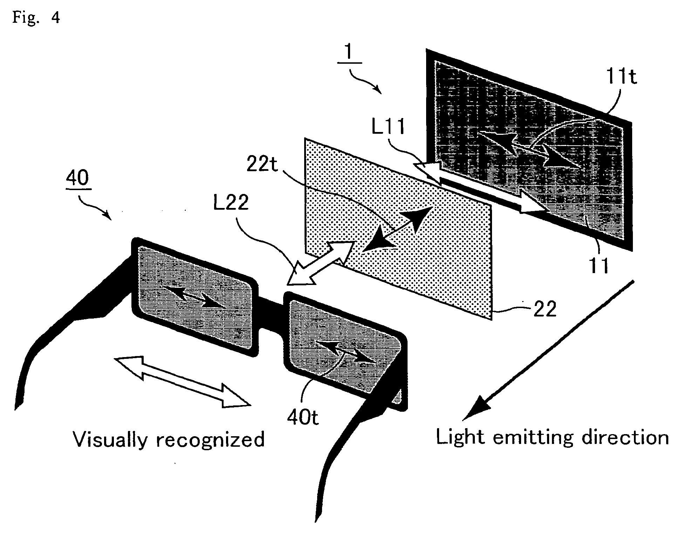

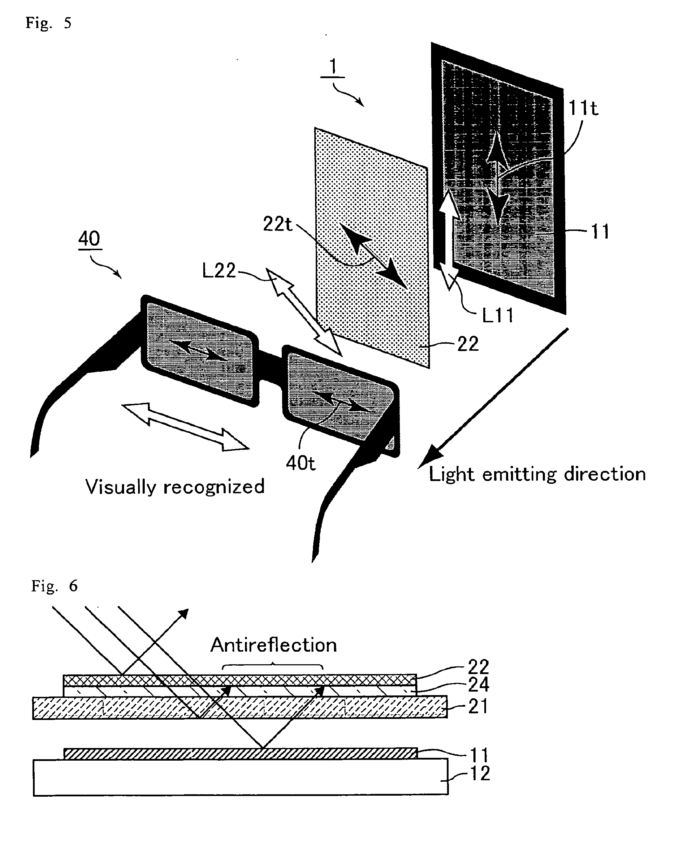

Therefore as Fig. 4 and Fig. 5 show, the vibrating direction of the linearly polarized light L11 emitted from the polarizing element 11 is changed by the polarizing element 22, and as a result, the vibrating direction of the linearly polarized light L22 emitted from the polarizing element 22 becomes a diagonal direction with respect to a side of the display screen. Hence both in the case of landscape mode and portrait mode, the vibrating direction of the linearly polarized light L22, that is, the transmission axis 22t of the polarizing element 22 and the transmission axis 40t of the polarized sunglasses 40, do not become approximately parallel or approximately orthogonal, a part of the linearly polarized light L22 therefore can transmit through the polarized sunglasses 40, as shown in the above Eq. (1). In other words, the images can be visually recognized in a state of wearing polarized sunglasses 40, no matter which mode the liquid crystal display device 1 is set. Thus according to the liquid crystal display device 1, the change of visibility depending on the direction of the screen can be decreased even if the screen is viewed in a state of wearing polarized sunglasses 40.

The liquid crystal display device 1 can exhibit the above effect when the screen is viewed through an optical member, such as polarized sunglasses, having a polarizing function. Therefore it is preferable that the liquid crystal display device 1 is used in an environment where polarized sunglasses are used, such as an environment where outdoor light enters. A digital signage is a particularly preferable application.

The wavelength dispersion of the polarizing element is normally smaller than that of the retarder. Hence even if the polarizing element 22 is used, the generation of coloring can be suppressed.

The liquid crystal display device 1 also has the protective plate 21 and a quarter-wave plate as the optical anisotropic layer 23 between the polarizing element 11 and the polarizing element 22. The quarter-wave plate has an effect (function) to convert linearly polarized light into circularly polarized light.

The digital signage is a preferred application of the liquid crystal display device 1, In such an application, it is more likely that the liquid crystal display panel 10 is damaged if the liquid crystal display panel 10 is exposed, compared with panels used at home. Therefore it is preferable that the protective plate 21 is disposed to protect the liquid crystal display panel 10.

On the other hand, if the protective plate 21 is disposed on the outermost surface of the liquid crystal display device 1, reflection is generated on the interface (surface) of the protective plate 21. In other words, the number of interfaces of the liquid crystal display device 1 increases by disposing the protective plate 21, which increases reflection of the outer light. As a result, a display quality drops. Hence as Fig. 6 shows, the quarter-wave plate 24 and the polarizing element 22 are combined so as to function as a circularly polarizing plate. Thereby the above mentioned increase in reflection of the outer light can be suppressed. Reflection on the surface of the polarizing element 11 can also be suppressed.

(Liquid crystal display panel)

The liquid crystal display panel 10 has the liquid crystal cell 12, and the polarizing elements 11 and 13. For the liquid crystal mode of the liquid crystal display panel 10, it is preferable that the polarization axis (absorption axis or transmission axis) of the polarizing element 11 is in a lateral direction (horizontal direction, 0° direction) or in a longitudinal direction (orthogonal direction, 90° direction) with respect to a side of the display screen (approximately square screen). Then liquid crystal modes, such as VA mode, IPS mode and FFS mode, which excel in a display quality, can be used.

The liquid crystal cell 12 has two substrates and a liquid crystal layer interposed between the two substrates.

A protective film for protecting these polarizing elements may or may not be disposed on each of the polarizing elements 11 and 13, but in terms of protecting the polarizing elements 11 and 13 from moisture or the like, disposing a protective film is preferable. In this case, the adhesive layer, a cell side protective film, the polarizing element 11 or 13 and an outer protective film are stacked in this sequence from the liquid cell 12 side.

(Cell side protective film)

The cell side protective film may play a role in a retardation film for compensating a viewing angle as well. In concrete terms, in the case of a liquid crystal display panel in VA mode, a combination of a retardation film having a relation of nx > ny ≅ nz and a retardation film having a relation of nx ≅ ny > nz, a combination of two retardation films having a relation of nx > ny > nz respectively, or a combination of a retardation film having a relation of nx > ny > nz and a retardation film having a relation of nx ≅ ny > nz are possible. In the case of a liquid crystal display panel in IPS mode or FFS mode, a combination of a retardation film having a relation of nx > ny ≅ nz and a retardation film having a relation of nz > nx ≅ ny or a combination of a retardation film having a relation of nx > nz > ny and a retardation film having a relation of nx ≅ ny ≥ nz is possible.

The above mentioned "ny ≅ nz" or "nx ≅ ny" includes not only a case of ny and nz, or nx and ny being perfectly the same, but also a case of these being substantially the same. For example, a case of (ny-nz)×d being -10 nm to +10 nm, or preferably -5 nm to +5 nm is included in "ny ≅ nz", and the case of |nx-ny|×d being 10 nm or less, or preferably 5 nm or less, is included in "nx ≅ ny".

For the retardation film having the relation of nx > ny ≅ nz, and the retardation film having the relation of nx > ny > nz, a film generated by stretching polymers having positive birefringence characteristics is normally used.

"Polymer having positive birefringence characteristics" refers to a polymer of which refractive index in an alignment direction relatively increases when the polymer is aligned by such a method as stretching, and many polymers are in this category. Examples of such a polymer having birefringence characteristics include polycarbonate resin, polyvinyl alcohol resin, cellulose resin, polyester resin, polyimide resin, cyclic polyolefine resin and polysulfone resin. Examples of cellulose resin include triacetylcellulose and diacetylcellulose. Examples of polyester resin include polyethylene terephthalate and polyethylene naphthalate. A polymer which is amorphous and has excellent heat resistant is especially preferable. Such polymers may be used alone or in combination with one or more polymers.

For the retardation film having the relation of nx > nz > ny, a film generated by stretching a polymer having negative birefringence characteristics is normally used.

"Polymer having negative birefringence characteristics" refers to a polymer of which refractive index relatively decreases in an alignment direction when aligned by such a method as stretching, in other words, a polymer of which refractive index increases in a direction orthogonal to the alignment direction. Examples of such a polymer include a polymer having a side chain that includes a chemical bond and/or functional group, such as an aromatic compound and carbonyl group, having high polymerization anisotropy. In concrete terms, examples of the polymer include acrylic resin, styrene resin and maleimide resin.

(Outer protective film)

For the outer protective film, an arbitrary appropriate film which can function as a protective layer of the polarizing elements 11 and 13 can be used. Examples of a polymer used for such a film include: cellulose resin, polycarbonate resin, polyvinyl alcohol resin, polysulfone resin, polystyrene resin and cyclic polyolefine resin. Examples of the cellulose resin include triacetylcellulose and diacetylcellulose.

On the opposite surface of the polarizing element 11 of the outer protective film, disposed on the polarizing element 11, surface treatment including: hard coat treatment; antireflection treatment; and treatment for sticking prevention, diffusion, and/or antiglare may be performed. Then the surface-treated liquid crystal display panel can be directly used for the liquid crystal display panel 10 of this embodiment.

The similar surface treatment may be performed on the opposite surface of the polarizing element 13 of the outer protective film disposed on the polarizing element 13. For a thinner profile of the device, the liquid crystal display panel 10 and the back light unit 30 may be bonded together, but in this case, an interference fringe (Newton ring) may be generated caused by the unevenness of luminance of the back light unit 30. This generation can be suppressed by performing surface treatment.

Hard coat treatment is performed for preventing scratches on the surface of the outer protective film surface, and a method thereof can be attaching a hard film (hard coat layer), which excels in hardness sliding characteristics and other characteristics, on the surface of the outer protective film using a UV curing resin, such as an acrylic resin and silicon resin.

Antireflection treatment is performed for preventing the reflection of outer light on the surface of the liquid crystal display device, and a conventional method can be used.

Antiglare treatment is performed for preventing interruption of visibility of the display due to reflection of outer light on the surface of the liquid crystal display device. For example, by providing a micro-bump structure on the surface of the outer protective film using such a method as a surface roughening and transparent fine particle mixing method. For the surface roughening, a sandblast method or an emboss processing method, for example, can be used.

(Polarizing elements 11 and 13)

For the polarizing elements 11 and 13, elements which allow to transmit polarized light having a plane of vibration in parallel with the transmission axis, and selectively absorb the polarized light having a plane of vibration in parallel with the absorption axis, out of two orthogonal linearly polarized light beams, can be used. Examples of such a polarizing element include a hydrophilic polymer film absorbing dichroism material, which is stretched in the width direction, an element where dichroism dye exhibiting lyotropic liquid crystallinity is aligned, or an element where dichroism dye is aligned in a homogeneously aligned thermotropic liquid crystal polymer matrix or homogeneously aligned crosslinkable liquid crystal polymer matrix.

Among these polarizing elements, a polyvinyl alcohol polarizing element containing iodine is preferable in terms of implementing a high degree of polarization. For a material of the polyvinyl alcohol film which is applied to the polarizing element, polyvinyl alcohol or derivatives thereof can be used. Examples of the derivatives of polyvinyl alcohol include: polyvinyl formal, polyvinyl acetal, and polyvinyl alcohol denatured by olefins, unsaturated carboxylic acids, alkylesters of the acids, and acrylic amides of the acids or the like. Examples of olefins include ethylene and propylene, and examples of unsaturated carboxylic acids include acrylic acid, metacrylic acid and crotonic acid. The degree of polymerization of the polyvinyl alcohol is normally about 1000 to 10000, and the saponification degree is normally 80 to 100 mol%.

The polyvinyl alcohol film can contain such an additive as plasticizer. For plasticizer, polyol and condensation products thereof can be used, and examples thereof include glycerine, diglycerine, triglycerine, ethylene glycol, propylene glycol and polyethylene glycol. The amount of plasticizer to be used is not especially limited, and is preferably 20 % by weight or less in the polyvinyl alcohol film.

For the polyvinyl alcohol film (unstretched film), at least uniaxial stretching processing or iodine dyeing processing is performed according to a conventional method. Boric acid processing and iodine ion processing can also be performed. After the above processing, the polyvinyl alcohol film (stretched film) is dried to be the polarizing element according to a conventional method.

The stretching method in the uniaxial stretching method is not especially limited, and both a wet stretching method and a dry stretching method can be used. Examples of a stretching means of the dry stretching method include: a roll stretching method, heated roll stretching method and compression stretching method. Stretching may be performed in multiple steps. In the stretching means, the unstretched film is normally in a heated state. The unstretched film having about a 30 to 150 $\mu$m thickness is normally used. The stretching ratio of the stretched film can be set according to purpose, but the stretching ratio (total stretching ratio) is about 2 to 8 times, preferably 3 to 6.5 times, and even more preferably is 3.5 to 6 times. The thickness of the stretched film is preferably about 5 to 40 $\mu$m.

Iodine dyeing processing is performed by dipping a polyvinyl alcohol film into an iodine solution containing iodine and potassium iodide. The iodine solution is normally an iodine aqueous solution, which contains iodine and potassium iodide as a dissolution assistant. The concentration of iodine is about 0.01 to 1 % by weight, preferably 0. 02 to 0. 5 % by weight, and the concentration of potassium iodide is about 0.01 to 10 % by weight, preferably 0.02 to 8 % by weight.

In the iodine dyeing processing, the temperature of the iodine solution is normally about 20 to 50°C, preferably 25 to 40°C. The dipping time is normally about 10 to 300 sec., preferably 20 to 240 sec. In the iodine dyeing processing, the concentration of the iodine solution, the temperature and time of dipping the polyvinyl alcohol film in the iodine solution, and other conditions are adjusted so that the iodine content and potassium content in the polyvinyl alcohol film reach the above mentioned range. The iodine dyeing processing may be executed at any stage of before uniaxial stretching processing, during uniaxial stretching processing, and after uniaxial stretching processing.

Boric acid processing is performed by dipping the polyvinyl alcohol film into a boric acid aqueous solution. The concentration of boric acid in the boric acid aqueous solution is about 2 to 15 % by weight, preferably 3 to 10 % by weight. The boric acid aqueous solution can contain potassium ions and iodine ions using potassium iodide. The concentration of the potassium iodide in the boric acid aqueous solution is about 0.5 to 10 % by weight, preferably 1 to 8 % by weight. By using boric acid aqueous solution containing potassium iodide, a polarizing element with less coloring, that is, a neutral gray polarizing element with absorbance which is approximately constant throughout the entire wavelength region of visible light, can be obtained.

For iodide ion processing, an aqueous solution containing iodine ions obtained from such a compound as potassium iodide is used. The concentration of potassium iodide is about 0.5 to 10 % by weight, preferably 1 to 8 % by weight. In the iodine ion dipping processing, the temperature of the aqueous solution is normally about 15 to 60°C, preferably 25 to 40°C. The dipping time is normally about 1 to 120 sec., preferably 3 to 90 sec. The iodine ion processing can be executed in any stage before the drying step. The iodine ion processing may be executed after the later mentioned washing.

The polarizing element may contain zinc. The polarizing element containing zinc is preferable in terms of suppressing deterioration of hue during heating. In terms of improving durability and suppressing deterioration of hue, the zinc content in the polarizing element is preferably adjusted so that the zinc element contained in the polarizing element is about 0.002 to 2 % by weight, preferably 0.01 to 1 % by weight.

The polyvinyl alcohol film (stretched film) through the above mentioned processing is provided for the washing step and drying step according to a conventional method.

The washing step is performed by dipping a polyvinyl alcohol film into pure water. The washing temperature is normally 5 to 50°C, preferably 10 to 45°C, more preferably 15 to 40°C. The dipping time is normally 10 to 300 sec. , preferably about 20 to 240 sec.

For the drying step, an arbitrary appropriate drying method, such as natural drying, air drying and heat drying, can be used. In the case of heat drying, for example, the drying temperature is typically 20 to 80°C, preferably 25 to 70°C, and the drying time is typically about 1 to 10 min. Moisture content of the polarizing element after drying is preferably 10 to 30 % by weight, more preferably 12 to 28 % by weight, and even more preferably 16 to 25 % by weight. If the moisture content is excessively high, the degree of polarization tends to drop with the drying of the stacked product, when a stacked product of the polarizing element and the cell side protective film and/or the outer protective film (normally cell side protective film and outer protective film), including an adhesive layer therebetween, that is, a polarizer, is dried. A black display in particular tends to be colored blue, since orthogonal transmittance increases in the 500 nm or shorter wavelength region, that is, light with a short wavelength leaks. If the moisture content of the polarizing element is excessively low, a local unevenness defect (knick defect) may occur.

(Optical anisotropic layer)

It is preferable that the optical anisotropic layer 23 is for converting linearly polarized light into circularly polarized light. "Circularly polarized light" refers to not only perfect circularly polarized light, but also polarized light close to perfect circularly polarized light, that is, elliptically polarized light with ellipticity close to 1. The perfect circularly polarized light is obtained when the linearly polarized light transmitted through a specific optical anisotropic layer (hereinafter referred to as "first optical anisotropic layer"). The slow axis of the first optical anisotropic layer forms a 45° angle with respect to the vibrating direction of the linearly polarized light, and retardation of the first optical anisotropic layer is 137.5 nm (quarter wave). The circularly polarized light includes the elliptically polarized light which is obtained when the linearly polarized light transmitted through a specific optical anisotropic layer (hereinafter referred to as "second optical anisotropic layer"). The slow axis of the second optical anisotropic layer forms a 45° angle with respect to the vibrating direction of the linearly polarized light, and the retardation of the second optical anisotropic layer is 110 to 180 nm.

It does not matter whether the circularly polarized light and the elliptically polarized light are clockwise or counterclockwise. The polarized state needs not be perfect polarized light, and may be partially polarized light which includes a partially unpolarized state.

For the optical anisotropic layer 23 for converting the linearly polarized light into the circularly polarized light, a quarter-wave plate 24 is preferable, and retardation of the quarter-wave plate 24 (optical anisotropic layer 23) is preferably 110 to 180 nm, more preferably 120 to 170 nm, and furthermore preferably 130 to 150 nm.

In terms of converting the linearly polarized light into circularly polarized light, and effectively decreasing interfacial reflection which is increased by disposing the protective plate 21, it is preferable that the angle formed by the slow axis of the optical anisotropic layer 23 (quarter-wave plate 24) and the absorption axis of the polarizing element 22 is 40° to 50°, 42° to 48° is more preferable, 43° to 47° is furthermore preferable, and 44° to 46° is especially preferable.

It is preferable that a slow axis of the optical anisotropic layer 23 (quarter-wave plate 24) and an absorption axis of the polarizing element 11 are disposed approximately in parallel. Then the optical anisotropic layer 23 (quarter-wave plate 24) does not unnecessarily influence the light (display light) emitted from the polarizing element 11.

(Polarizing element 22)

The polarizing element 22 can be fabricated by the same method used for the polarizing elements 11 and 13. Particularly for the polarizing element 22, the above mentioned polyvinyl alcohol polarizing element containing iodine (iodine type polarizing element) and the dye type polarizing element are preferable, then the transmission spectrum in a visible light range can be flat (approximately uniform), and the generation of coloring can be effectively suppressed. A wire grid or brightness improved film (e.g. DBEF of 3M Inc.) type polarizing elements can also be used as the polarizing element 22, since the transmission spectrum thereof is relatively flat. In terms of preventing reflection using the circularly polarized plate constituted by the polarizing element 22 and the quarter-wave plate 24, the iodine type polarizing element is particularly preferable. This is because the iodine type polarizing element can ensure some degree of polarization. The degree of polarization, when a dye type polarizing element is used, is also relatively high, and in the case of this polarizing element, environment resistance, such as heat resistance, is high. Hence the dye type polarizing element is suitable for the polarizing element 22 of the liquid crystal display device 1, which is used for a digital signage application.

In terms of sufficiently ensuring visibility in the state of wearing polarized sunglasses, in both the landscape mode or portrait mode, it is preferable that the angle formed by the absorption axis of the polarizing element 11 and the absorption axis of the polarizing element 22 is 20° to 70°.

In terms of decreasing the change in brightness between the landscape mode and the portrait mode, it is preferable that the angle formed by the absorption axis of the polarizing element 11 and the absorption axis of the polarizing element 22 is 30° to 60°, but 35° to 55° is more preferable, and 40° to 50° is especially preferable, and approximately 45° is most preferable.

A protective film for protecting the polarizing element 22 may or may not be disposed on the observation surface side of the polarizing element 22, but in terms of protecting the polarizing element 22, it is preferable that the protective film is disposed. For the protective film of the polarizing element 22, one the same as the above-mentioned outer protective film can be used.

On the observation-surface-side surface of the polarizing element 22, it is preferable that the above mentioned surface treatment, such as the hard coat treatment, antireflection treatment and treatment for sticking prevention, diffusion and/or antiglare, is performed.

In terms of preferably decreasing reflection on the outermost surface of the liquid crystal display device 1 in particular, it is most preferable to perform treatment for attaching a moth-eye structure having an antiglare function on the observation-surface-side surface of the polarizing element 22 as the antireflection treatment.

The moth-eye structure having an antiglare function can be formed by the following steps, for example. First an aluminum substrate (rough surface substrate) where micro-bumps are generated on the surface by a surface roughening method is fabricated. Examples of the surface roughening method include a sandblast method and emboss processing method. Then the step of forming a porus alumina layer having a plurality of micro-concave portions generated by anodizing the aluminum substrate and the step of expanding the micro-concave portions by contacting the porous alumina layer with alumina etchant are repeated. Thereby a die on which a plurality of cylindrical concave portions are formed on the aluminum substrate can be fabricated. The UV curable resin film coated on such a base film as a triacetylcellulose film onto which the die is pressed is irradiated with UV light so that the cylindrical bump structure (moth-eye structure) is transferred to the surface of the resin film. A mirror finished aluminum substrate may be used instead of the rough surface substrate, but it is preferable to use the rough surface substrate in terms of suppressing the surface reflection more effectively.

(Protective plate)

The protective plate 21 is not particularly restricted so long as it is a transparent plate (base material) that can protect the liquid crystal display panel 10, and examples of the material thereof include: acrylic resin, inorganic glass and polycarbonate. For the acrylic resin, PMMA (polymethyl methacrylate) can be used.
The liquid crystal display panel 10 and the protective plate 21 could be glued together using such an adhesive as curable resin, but bubbles may generate. If the liquid crystal display panel 10 and the protective plate 21 are disposed with an air layer therebetween, the strength of the device can be improved inexpensively.
The front plate 20 may have a touch panel instead of the protective plate 21.
The liquid crystal display device 1 of this embodiment can be a reflective liquid crystal display device having a reflecting member instead of the polarizing element 13, but in this case, the screen becomes darker since the light transmits through the polarizing element 22 twice. Whereas in the case of the transmissive, the screen can be brighter since the light transmits through the polarizing element 22 only once.

[Example 1]

(Fabrication of quarter-wave plate)

A long retardation film (quarter-wave plate) was created by uniaxially stretching the long cyclic polyolefine resin film (made by Zeon Corp., product name: Zeonoa film) to be 1.52 times between rolls having different circumferential speeds at 140°C. The thickness of this film was 35 μm, and the in-plane retardation Re was 139 nm.

(Fabrication of front plate)

The obtained quarter-wave plate was glued together with a commercial polarizer (made by Nitto Denko Corp. , product name: SEG 1224DU) with an adhesive layer therebetween. At this time, the angle formed by the slow axis of the quarter-wave plate and the absorption axis of the polarizer was set to be 45°. This polarizer had a structure of an iodine polarizing film being interposed between two TACs.
The obtained polarizer with the quarter-wave plate was attached to a glass substrate which was a protective plate. Here the absorption axis of the polarizer was set to make a 45° angle with respect to the absorption axis of the polarizer at the observation surface side of the later mentioned liquid crystal TV.
Then an antireflection film with the moth-eye structure having an antiglare function was attached to the opposite surface of the polarizer of the quarter-wave plate, whereby the front plate was fabricated.

(Fabrication of liquid crystal display device)

The liquid crystal display device of Example 1 was fabricated by disposing the front plate at the observation surface side of the commercial liquid crystal TV (made by Sharp Corp., product name: LC-40AE6). The polarizer at the observation surface side of the liquid crystal TV had a structure of an iodine polarizing film being interposed between two TACs, and the polarizer at the rear face side had a structure of an iodine polarizing film being interposed between a retardation film and a TAC.

[Comparative Example 1]

The commercial liquid crystal TV (made by Sharp Corp., product name: LC-40AE6), which did not have the front plate, was used as a liquid crystal display device of Comparative Example 1.

[Evaluation]

The contrast ratio (CR) and chromaticity during white display were measured for the liquid crystal display devices of Example 1 and Comparative Example 1, using a brightness meter (made by Topcon Corp., product name: BM-5A). In this measurement, the commercial polarizer (made by Nitto Denko Corp. , product name: SEG 1224DU) was installed on the front face of the measuring portion of the brightness meter, assuming the case of viewing the screen in a state of wearing polarized sunglasses. The measurement was performed for a case of disposing the screen of the liquid crystal display device such that the long side thereof was horizontal (landscape mode), and a case of disposing it such that the long side thereof was vertical (portrait mode). The absorption axis of the polarizer which was disposed assuming the polarized sunglasses was in a horizontal direction.
Table 1 shows results of measuring the brightness and contrast ratio (CR) of the liquid crystal display devices of Example 1 and Comparative Example 1.
[Table 1]

|  | Horizontal (landscape mode) | | | Vertical (portrait mode) | | |
|---|---|---|---|---|---|---|
|  | White display | Black display | CR | White display | Black display | CR |
| Example 1 | 126.4 | 0.036 | 3511 | 123.4 | 0.035 | 3526 |
| Comparative Example 1 | 228.4 | 0.064 | 3569 | Not visually recognized | - | - |

As Table 1 shows, in the case of the liquid crystal display device of Example 1, brightness was sufficient and the display screen can be viewed both when the screen was horizontal (landscape mode) and when the screen is vertical (portrait mode). Even if the screen was viewed without wearing polarized sunglasses, the white display was not colored.
In the case of the liquid crystal display device of Comparative Example 1, on the other hand, the display screen could be viewed when the screen was horizontal (landscape mode), but could not be viewed when the screen was vertical (portrait mode).
As a result, the liquid crystal display device of Example 1 excelled in visibility even when the display screen was viewed through polarizing lenses, such as polarized sunglasses.
The present application claims priority to Patent Application No. 2009-275667 filed in Japan on December 3, 2009, under the Paris Convention and provisions of national law in a designated State. The entire contents of which are hereby incorporated by reference.

EXPLANATION OF SYMBOLS

| 1 | liquid crystal display device |
|---|---|
| 10 | liquid crystal display panel |
| 11, 13 | polarizing element |
| 12 | liquid crystal cell |
| 20 | front plate |
| 21 | protective plate |
| 22 | polarizing element |
| 23 | optical anisotropic layer |
| 24 | quarter-wave plate |
| 30 | back light unit |
| 40 | polarized sunglasses |

**Claims**

1. A liquid crystal display device, comprising:

    a liquid crystal cell; and

a first polarizing element disposed at an observation surface side of the liquid crystal cell,
wherein the liquid crystal display device further comprises a second polarizing element disposed at the observation surface side of the first polarizing element.

2. The liquid crystal display device according to Claim 1,
wherein an angle formed by an absorption axis of the first polarizing element and an absorption axis of the second polarizing element is 20° to 70°.

3. The liquid crystal display device according to Claim 1 or 2, further comprising a protective plate disposed between the first polarizing element and the second polarizing element.

4. The liquid crystal display device according to Claim 3, further comprising an optical anisotropic layer disposed between the second polarizing element and the protective plate.

5. The liquid crystal display device according to Claim 4,
wherein the optical anisotropic layer is a quarter-wave plate.

6. The liquid crystal display device according to Claim 4 or 5,
wherein an angle formed by a slow axis of the optical anisotropic layer and an absorption axis of the second polarizing element is 40° to 50°.

7. The liquid crystal display device according to any one of Claims 4 to 6,
wherein a slow axis of the optical anisotropic layer and an absorption axis of the first polarizing element are disposed approximately in parallel.

8. The liquid crystal display device according to any one of Claims 1 to 7, further comprising a low reflection processed layer disposed at the observation surface side of the second polarizing element.

9. The liquid crystal display device according to Claim 8,
wherein the low reflection processed layer has a moth-eye structure.

10. The liquid crystal display device according to any one of Claims 1 to 9, further comprising a third polarizing element disposed at a rear face side of the liquid crystal cell.

11. The liquid crystal display device according to any one of Claims 1 to 10,
wherein the liquid crystal display device has an approximately square screen, and
an absorption axis of the first polarizing element is disposed to be approximately orthogonal to or approximately parallel with a side of the screen.

Fig. 1

Fig. 2

Visually recognized

Light emitting direction

Fig. 3

101

40

L11

11t

11

40t

Not visually recognized

Light emitting direction

Fig. 4

40

22t

L22

L11

1

11t

11

22

40t

Visually recognized

Light emitting direction

EP 2 508 940 A1

Fig. 5

1

11t

22t

L22

40

L11

22

40t

Visually recognized

Light emitting direction

Fig. 6

Antireflection

22
24
21

11
12

16

## INTERNATIONAL SEARCH REPORT

| | International application No. |
|---|---|
| | PCT/JP2010/068614 |

A. CLASSIFICATION OF SUBJECT MATTER

*G02F1/1335*(2006.01)i, *G02B1/11*(2006.01)i, *G02B5/30*(2006.01)i, *G09F9/00* (2006.01)i

According to International Patent Classification (IPC) or to both national classification and IPC

B. FIELDS SEARCHED

Minimum documentation searched (classification system followed by classification symbols)
G02F1/1335, G02B1/11, G02B5/30, G09F9/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 2008/081919 A1 (Sony Corp.),<br>10 July 2008 (10.07.2008),<br>paragraphs [0038] to [0042], [0055] to [0059];<br>fig. 2<br>& US 2009/0244412 A    & CN 101416085 A | 1-3,10,11<br>8,9<br>4-7 |
| Y | WO 2009/104414 A1 (Sharp Corp.),<br>27 August 2009 (27.08.2009),<br>paragraphs [0026] to [0033]; claim 6; fig. 1, 3<br>(Family: none) | 8,9 |
| A | JP 2005-250061 A (Hitachi, Ltd.),<br>15 September 2005 (15.09.2005),<br>entire text<br>& US 2005/0195369 A1    & CN 1667471 A | 1-11 |

☒ Further documents are listed in the continuation of Box C. ☐ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 November, 2010 (12.11.10) | 22 November, 2010 (22.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/068614

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2004-004462 A  (Casio Computer Co., Ltd.), 08 January 2004 (08.01.2004), entire text & US 2003/0210360 A1    & TW 594172 B & CN 1453609 A | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009122454 A
- JP 2009122423 A
- JP 2008083115 A
- JP 2004170875 A